# EUROPÄISCHE PATENTSCHRIFT

(11) **EP 2 006 017 B1**
(45) Veröffentlichungstag und Bekanntmachung des Hinweises auf die Patenterteilung: **18.05.2011**
(21) Anmeldenummer: 08157822.1
(22) Anmeldetag: 09.06.2008
(51) Int. Cl.: B01F 5/04, B01F 3/04, B01F 5/06, B21D 5/00, B21D 53/00, F01N 3/20

(54) **Misch- und/oder Verdampfungseinrichtung und zugehöriges Herstellungsverfahren**
Mixing and/or vaporisation device and corresponding manufacturing method
Dispositif de mélange et/ou d'évaporation et procédé de fabrication correspondant

(30) Priorität: 18.06.2007 DE 102007028449
(43) Veröffentlichungstag der Anmeldung: 24.12.2008
(73) Patentinhaber: J. Eberspächer GmbH & Co. KG, 73730 Esslingen (DE)
(72) Erfinder: Wirth, Georg, 73230, Kirchheim/Teck (DE); Neumann, Felix, 73732, Esslingen (DE)
(74) Vertreter: BRP Renaud & Partner

(56) Entgegenhaltungen:
- EP-A- 1 657 414
- EP-A- 1 835 139
- EP-A- 1 953 359
- EP-A- 1 985 356
- DE-A1- 10 239 417
- FR-A- 2 384 206
- US-A- 4 515 138
- US-A- 4 929 088
- US-A- 6 109 781
- US-A1- 2003 226 539
- US-A1- 2008 079 179
- US-B1- 6 431 528
- US-B1- 6 536 420

## Beschreibung

Die vorliegende Erfindung betrifft eine Misch- und/oder Verdampfungseinrichtung für eine Abgasanlage einer Brennkraftmaschine, insbesondere in einem Kraftfahrzeug. Die Erfindung betrifft außerdem ein Verfahren zur Herstellung einer derartigen Misch- und/oder Verdampfungseinrichtung sowie eine mit einer derartigen Misch- und/oder Verdampfungseinrichtung ausgestattete Abgasanlage.

Bei Abgasanlagen von Brennkraftmaschinen kann es aus unterschiedlichen Gründen erforderlich sein, ein flüssiges Edukt in den Abgasstrom einzudüsen. Beispielsweise kann Kraftstoff stromauf eines Oxidationskatalysators in den Abgasstrom eingespritzt werden, um an einem stromab nachfolgenden Oxidationskatalysator eine exotherme Verbrennungsreaktion auszulösen. Ebenso kann beispielsweise ein Reduktionsmittel, wie z.B. Ammoniak, in den Abgasstrom eingespritzt werden, um in einem nachfolgend angeordneten SCR-Katalysator vom Abgas mitgeführte Stickoxide zu reduzieren. Anstelle von Ammoniak kann auch Harnstoff bzw. eine wässrige Harnstofflösung in den Abgasstrom eingespritzt werden. Durch eine Hydrolysereaktion entstehen aus der Harnstoff-Wasser-Lösung dann Ammoniak und Wasser. Ferner kann ein Kraftstoff oder ein anderes geeignetes Reduktionsmittel stromauf eines NOX-Speicherkatalysators in die Abgasströmung eingespritzt werden, um den NOX-Speicherkatalysator zu regenerieren.

Um die Wirkungsweise des in flüssiger Form in den Abgasstrang eingespritzten Edukts zu verbessern bzw. zu ermöglichen, ist eine weitgehende Verdampfung ebenso erstrebenswert wie eine intensive Durchmischung mit dem Abgas, um so ein möglichst homogenes Abgas-Edukt-Gemisch zu erhalten. Hierzu kann die Abgasanlage mit einer im Abgasstrang stromab der Einspritzeinrichtung angeordneten Misch- und/oder Verdampfungseinrichtung ausgestattet sein.

Je nach verwendeter Einspritzeinrichtung kann das Edukt in Form eines Flüssigkeitsstrahls eingebracht werden, der sich kegelförmig aufweitet. Bei niedrigen Motorlasten und Abgastemperaturen herrschen niedrige Abgastemperaturen und geringe Strömungsgeschwindigkeiten. In der Folge kann der Flüssigkeitsstrahl auf eine entsprechende Struktur der Misch- und/oder Verdampfungseinrichtung auftreffen. Je nach Ausgestaltung der Misch- und/oder Verdampfungseinrichtung kann der Flüssigkeitsstrahl zumindest teilweise die jeweilige Struktur der Misch- und/oder Verdampfungseinrichtung ungehindert durchdringen und dann in flüssiger Form zu einer Abgasbehandlungseinrichtung gelangen, bei der an sich die eingedüste Flüssigkeit nur in Form eines möglichst homogenen Gasgemischs ankommen soll. Eine reduzierte Wirkungsweise sowie die Gefahr von Beschädigungen sind die Folge.

Aus der DE 102 39 417 A1 ist eine Misch- und/oder Verdampfungseinrichtung für eine Abgasanlage einer Brennkraftmaschine gemäss dem Oberbegriff des Anspruchs 1 bekannt, die einen Rohrkörper aufweist, an dessen einen axialen Ende mehrere, in Umfangsrichtung zueinander benachbarte, radial nach innen vorstehende Schaufeln angeordnet sind. Die Schaufeln sind dabei gegenüber der Axialrichtung angestellt. Der Rohrkörper ist dabei zusammen mit den Schaufeln aus einem einzigen Blechkörper durch Umformen hergestellt.

Aus der US 4,929,088 ist ein Verfahren zum Herstellen einer Misch- und/oder Verdampfungseinrichtung bekannt, bei dem ein ebener Blechstreifen mit seitlichen Schnitten versehen wird, die sich parallel zueinander erstrecken und die gegenüber einer Längsrichtung des Blechstreifens geneigt sind, bei dem außerdem die durch die Schnitte gebildeten Querstreifen jeweils um eine geneigt oder quer zum jeweiligen Schnitt verlaufende Biegeachse gegenüber dem übrigen Blechstreifen umgebogen werden und bei dem ferner der Blechstreifen aufgerollt wird, derart, dass die umgebogenen Querstreifen radial nach innen zeigende Schaufeln bilden und dass der übrige Blechstreifen einen in Umfangsrichtung geschlossenen Ringkörper bildet.

Eine gattungsgemäße Misch- und/oder Verdampfungseinrichtung sowie ein gattungsgemäßes Herstellungsverfahren sind aus der nachveröffentlichten EP 1 985 356 A2 bekannt.

Die vorliegende Erfindung beschäftigt sich mit dem Problem, für eine Misch- und/oder Verdampfungseinrichtung bzw. eine damit ausgestattete Abgasanlage bzw. für ein zugehöriges Herstellungsverfahren eine verbesserte Ausführungsform anzugeben, die sich insbesondere durch eine preiswerte Herstellbarkeit auszeichnet. Zusätzlich kann eine verbesserte Verdampfungswirkung erwünscht sein.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Misch- und/oder Verdampfungseinrichtung aus nur einem einzigen Blechkörper herzustellen, an dem hierzu ein Rohrkörper und davon radial nach innen abstehende Schaufeln ausgebildet werden. Hierdurch lässt sich die Misch- und/oder Verdampfungseinrichtung vergleichsweise preiswert herstellen. Erfindungsgemäß sind die Schaufeln gezielt so angeordnet und ausgestaltet, dass sie gegenüber einer Axialrichtung des Rohrkörpers angestellt sind. Hierdurch wird im Bereich der Schaufeln der Strömungswiderstand erhöht und ein Drall erzeugt. Der Drall in der Abgasströmung erzeugt eine Verwirbelung, die einerseits die Verdampfung des gegebenenfalls flüssigen Edukts unterstützt und die andererseits die Homogenisierung des Gemischs verbessert.

Erfindungsgemäß sind die Schaufeln so angeordnet und ausgestaltet, dass sie sich in Umfangsrichtung überlappen und zwar derart, dass eine koaxial angeordnete, in Axialrichtung blickdichte Fläche entsteht. Durch die Ausbildung einer derartigen blickdichten Fläche kann ein Durchschlag für Flüssigkeitströpfchen durch die Mischerstruktur vermieden werden. Die Tröpfchen treffen in der Fläche an den Schaufeln auf und können dadurch leichter verdampfen.

Ferner sind bei der Erfindung die Schaufeln so ausgestaltet und angeordnet, dass die sich durch Überlappung der Schaufeln ausbildende Fläche eine Ringfläche ist, die einen zentralen Kernbereich umschließt. Hierdurch ergibt sich die Möglichkeit, den Kernbereich und die Ringfläche strömungstechnisch unterschiedlich auszugestalten. Insbesondere ist es möglich, die Schaufeln so auszugestalten und anzuordnen, dass sich im Kernbereich ein kleinerer Durchströmungswiderstand einstellt als im Bereich der Ringfläche. Hierdurch lässt sich im Kernbereich der Druck absenken, was zu einer Beschleunigung der Abgasströmung im Zentrum genutzt werden kann. Die erhöhte Strömungsgeschwindigkeit im Zentrum begünstigt die Verdampfung des Flüssigkeitsstrahls. Besonders vorteilhaft ist es dabei, den Flüssigkeitsstrahl so auszurichten, dass er radial außerhalb des zentralen Kernbereichs auf die Schaufeln trifft.

Um den Strömungswiderstand im Kernbereich gegenüber dem Bereich der Ringfläche zu reduzieren, ist erfindungsgemäß der Kernbereich als zentrale Durchgangsöffnung ausgestaltet, die axial in Axialrichtung im wesentlichen blickdicht ausgestaltet ist, um auch hier einen Durchschlag von Flüssigkeitströpfchen effektiv vermeiden zu können. Ein blickdichter Kernbereich mit gegenüber der Ringfläche reduziertem Strömungswiderstand wird erfindungsgemäß dadurch realisiert, dass sich nicht alle, sondern nur einige der Schaufeln bis in den Kernbereich erstrecken.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Abgasanlage,
- Fig. 2: eine Axialansicht einer Misch- und/oder Verdampfungseinrichtung, wobei es sich nicht um eine Ausführungsform der Erfindung handelt,
- Fig. 3: eine Axialansicht wie in Fig. 2, jedoch in der entgegengesetzten Blickrichtung,
- Fig. 4: eine perspektivische Ansicht der in den Fig. 2 und 3 gezeigten Misch- und/oder Verdampfungseinrichtung,
- Fig. 5a: eine Ansicht wie in Fig. 2, jedoch bei einer anderen Ausführungsform, wobei es sich nicht um eine Ausführungsform der Erfindung handelt,
- Fig. 5b: eine Ansicht wie in Fig. 5a, jedoch mit einer symbolisch angedeuteten Ringfläche,
- Fig. 6a: eine Ansicht wie in Fig. 3, jedoch bei der Ausführungsform gemäß Fig. 5a,
- Fig. 6b: eine Ansicht wie in Fig. 6a, jedoch mit einer symbolisch dargestellten Ringfläche,
- Fig. 7: eine perspektivische Ansicht auf die Misch- und/oder Verdampfungseinrichtung der Fig. 5 und 6,
- Fig. 8: eine Ansicht einer Misch- und/oder Verdampfungseinrichtung wie in Fig. 5, jedoch bei einer anderen Ausführungsform, wobei es sich um eine Ausführungsform der Erfindung handelt,
- Fig. 9a bis 9g: Ansichten eines Blechkörpers bei verschiedenen Zuständen im Rahmen der Herstellung einer Misch- und/oder Verdampfungseinrichtung gemäß den Fig. 2 bis 4, wobei es sich nicht um eine Ausführungsform der Erfindung handelt,
- Fig. 10a bis 10d: Ansichten eines Blechkörpers bei verschiedenen Herstellungsstufen einer Misch- und/oder Verdampfungseinrichtung gemäß den Fig. 5 bis 7, wobei es sich nicht um eine Ausführungsform der Erfindung handelt,
- Fig. 11 bis 13: Ansichten eines Blechkörpers während der Herstellung einer Misch- und/oder Verdampfungseinrichtung bei verschiedenen Ausführungsformen der Erfindung.

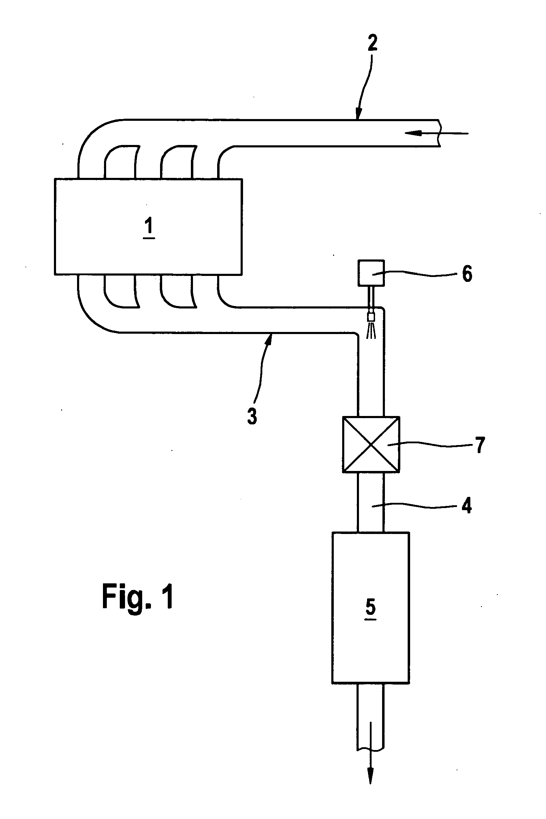

Entsprechend Fig. 1 weist eine Brennkraftmaschine 1, die beispielsweise in einem Kraftfahrzeug angeordnet sein kann, zur Versorgung mit Frischgas, vorzugsweise Luft, eine Frischgasanlage 2 und zum Abführen von Abgas eine Abgasanlage 3 auf. Eine derartige Abgasanlage 3 umfasst einen Abgasstrang 4, der im Betrieb der Brennkraftmaschine 1 das dort entstehende Abgas von der Brennkraftmaschine 1 abführt. Die Abgasanlage 3 kann zumindest eine Abgasbehandlungseinrichtung 5 aufweisen, die im Abgasstrang 4 angeordnet ist. Bei dieser Abgasbehandlungseinrichtung 5 kann es sich z.B. um einen Oxidationskatalysator, um einen NOX-Speicherkatalysator, um einen Hydrolysereaktor, um einen SCR-Katalysator oder um ein Partikelfilter handeln. Ebenso können einzelne oder mehrere der genannten Einrichtungen in einem gemeinsamen Gehäuse, insbesondere in Verbindung mit einem Schalldämpfer untergebracht sein. Ferner weist die Abgasanlage 3 eine Einspritzeinrichtung 6 auf, die dazu ausgestaltet ist, ein flüssiges Edukt in den Abgasstrang 4 einzuspritzen. Dabei ist die Einspritzeinrichtung 6 am Abgasstrang 4 stromauf der Abgasbehandlungseinrichtung 5 angeordnet. Beim flüssigen Edukt kann es sich vorzugsweise um Kraftstoff handeln, insbesondere um denselben Kraftstoff, mit dem auch die Brennkraftmaschine 1 betrieben wird. Ferner kann es sich beim Edukt auch um Ammoniak oder um Harnstoff bzw. um eine wässrige Harnstofflösung handeln. Sofern eine Kraftstoffinjektion vorgesehen ist, handelt es sich bei der unmittelbar stromab zur Einspritzeinrichtung 6 benachbarten Abgasbehandlungseinrichtung 5 vorzugsweise um einen Oxidationskatalysator, an dem eine Umsetzung des Kraftstoffs in Wärme erfolgt, beispielsweise um den Oxidationskatalysator auf seine Betriebstemperatur zu bringen oder um ein stromab des Oxidationskatalysator angeordnetes Partikelfilter auf eine Regenerationstemperatur aufzuheizen. Sofern die Einspritzeinrichtung 6 zum Einspritzen von Ammoniak ausgestaltet ist, kann es sich bei der Abgasbehandlungseinrichtung 5 um einen SCR-Katalysator handeln. Sofern Harnstoff oder eine Harnstoff-Wasser-Lösung eingedüst wird, kann es sich bei der unmittelbar stromab folgenden Abgasbehandlungseinrichtung 5 vorzugsweise um einen Hydrolysereaktor oder HydrolyseKatalysator handeln, in dem der Harnstoff in Ammoniak umgesetzt wird, um einen nachfolgenden SCR-Katalysator zu beaufschlagen. Ebenso kann auf die Einspritzeinrichtung 6 direkt eine als SCR-Katalysator ausgestaltete Abgasbehandlungseinrichtung 5 folgen, in der zusätzlich die Hydrolysereaktion abläuft. Darüber hinaus sind noch beliebige andere Anwendungen für die Einspritzung eines flüssigen Edukts in den Abgasstrang 4 unmittelbar stromab einer Abgasbehandlungseinrichtung 5 denkbar.

Gemäß Fig. 1 wird für die Eindüsung des Edukts eine axiale Ausrichtung des Eduktstrahls bevorzugt, was z.B. exemplarisch durch eine entsprechende Biegung im Abgasstrang 4 realisierbar ist.

Um das eingespritzte, flüssige Edukt möglichst rasch und möglichst vollständig im Abgas verdampfen zu können und um das verdampfte Edukt möglichst homogen mit dem Abgas zu vermischen, ist die Abgasanlage 3 mit einer Misch- und/oder Verdampfungseinrichtung 7 ausgestattet, die im Abgasstrang 4 stromab der Einspritzeinrichtung 6 und zweckmäßig stromauf oder unmittelbar an oder in der zur Einspritzeinrichtung 6 benachbarten Abgasbehandlungseinrichtung 5 angeordnet ist.

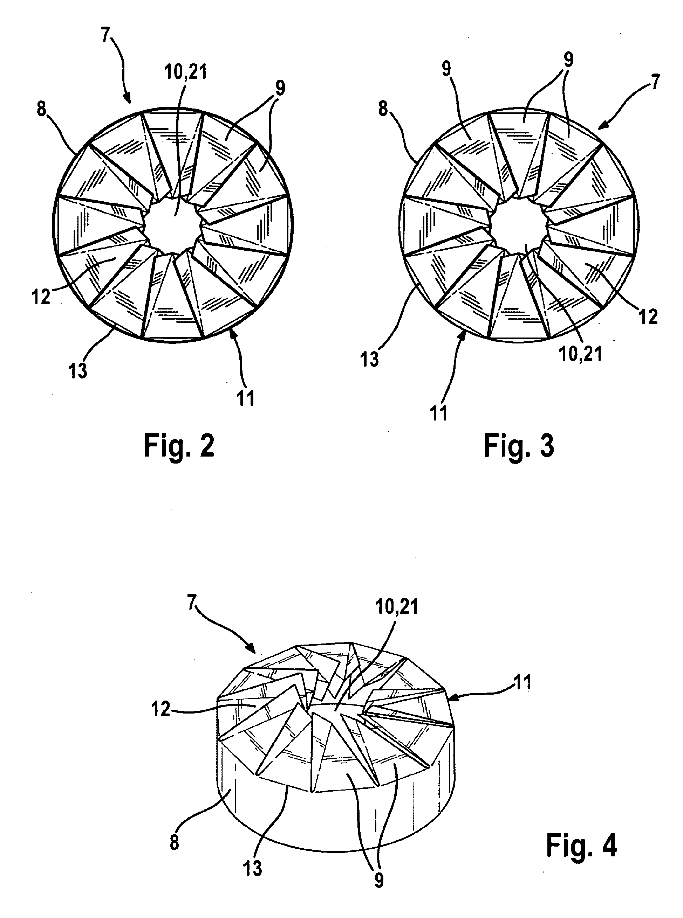

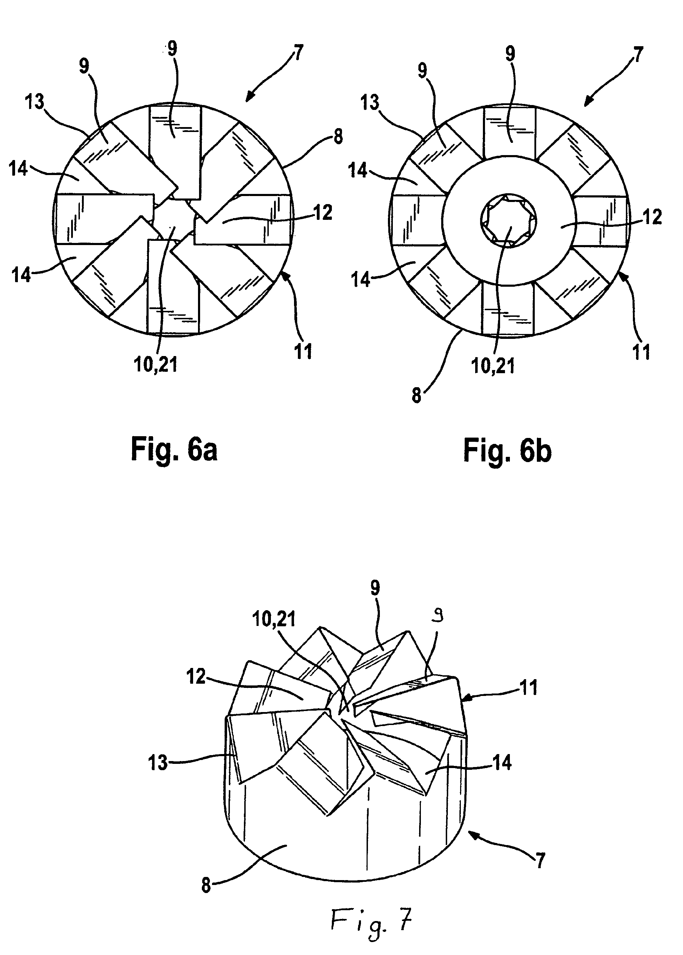

Bevorzugte Ausführungsformen der Misch- und/oder Verdampfungseinrichtung 7, die im Folgenden auch abgekürzt mit Einrichtung 7 bezeichnet wird, werden im Folgenden mit Bezug auf die Fig. 2 bis 8 näher erläutert.

Entsprechend den Fig. 2 bis 8 umfasst eine Einrichtung 7 einen Rohrkörper 8, der vorzugsweise zylindrisch, insbesondere kreiszylindrisch, geformt ist. An einem seiner axialen Enden weist der Rohrkörper 8 mehrere Schaufeln 9 auf, die ebenfalls einen Bestandteil Einrichtung 7 bilden. Die Schaufeln 9 sind in Umfangsrichtung zueinander benachbart angeordnet und stehen dabei vom Rohrkörper 8 radial nach innen vor. Die Schaufeln 9 sind gegenüber der Axialrichtung des Rohrkörpers 8 angestellt. Das heißt, die jeweilige Schaufel 9 besitzt eine Anströmkante und eine Abströmkante, die bezüglich der Umfangsrichtung zueinander beabstandet sind. Dementsprechend besitzt die jeweilige Schaufel 9 Querschnittsprofile, deren Längsrichtung gegenüber der Axialrichtung geneigt verläuft. Durch die Anstellung der Schaufeln 9 kann die Strömung mit einem Drall beaufschlagt werden, wenn sie die Einrichtung 7 durchströmt.

Besonders vorteilhaft ist nun, dass der jeweilige Rohrkörper 8 zusammen mit allen Schaufeln 9 aus einem einzigen Blechkörper 11 hergestellt ist, und zwar durch Umformen entsprechender Bereiche dieses Blechkörpers 11. Somit handelt es sich bei der jeweiligen Einrichtung 7 um einen aus einem Stück hergestellten Blechformkörper.

Bei den hier gezeigten, bevorzugten Ausführungsformen sind die Schaufeln 9 so ausgestaltet und angeordnet, dass sie sich in der Umfangsrichtung gegenseitig überlappen, und zwar so, dass eine Fläche 12 entsteht, die in axialer Richtung blickdicht ist. Diese blickdichte Fläche 12 kann durch eine entsprechende Ausgestaltung und Anordnung der Schaufeln 9 grundsätzlich als Kreisfläche ausgestaltet sein. Hierdurch kann auf besonders effektive Weise ein Tröpfchendurchschlag durch die Einrichtung 7 vermieden werden. Alternativ können die Schaufeln 9 auch so angeordnet und ausgestaltet sein, dass die Fläche 12 wie bei den hier gezeigten Ausführungsformen eine Ringfläche ist, die im folgenden ebenfalls mit 12 bezeichnet wird. Die Ringfläche 12 umschließt dabei einen zentralen Kernbereich 10. Durch gezielte Ausgestaltung, also Formgebung und Anordnung der Schaufeln 9 lassen sich nun die strömungstechnischen Eigenschaften der Einrichtung 7 in diesem Kernbereich 10 sowie im Bereich der Ringfläche 12 unterschiedlich gestalten. Bevorzugt werden hierbei die hier gezeigten Ausführungsformen, bei denen die Schaufeln 9 so ausgestaltet und angeordnet sind, dass sich für den Durchströmungswiderstand der Einrichtung 7 im Kernbereich 10 ein kleinerer Wert einstellt als im Bereich der Ringfläche 12. Hierdurch sinkt im Kernbereich 10 der Druck, was zu einer Beschleunigung der Strömung führt. Die erhöhte Strömungsgeschwindigkeit unterstützt einerseits die Verdampfung und andererseits die Gemischbildung.

Bei den Ausführungsformen der Fig. 2 bis 7 wird der Strömungswiderstand im Kernbereich 10 gegenüber dem Bereich der Ringfläche 12 dadurch reduziert, dass der Kernbereich 10 eine zentrale Durchgangsöffnung 21 bildet. Diese Durchgangsöffnung 21 ist axial frei oder offen und besitzt dementsprechend einen im Vergleich zur blickdichten Ringfläche 12 deutlich niedrigeren Durchströmungswiderstand. Die zentrale Durchgangsöffnung 21 wird dadurch realisiert, dass sich alle Schaufeln 9 mit ihren freien Enden nur innerhalb der Ringfläche 12 erstrecken und jeweils am Kernbereich 10 enden. Insbesondere sind alle Schaufeln 9 identisch geformt.

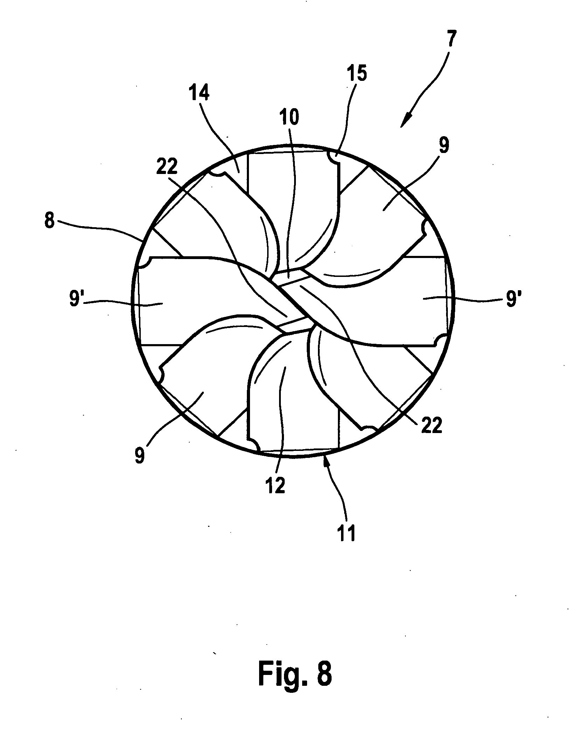

Im Unterschied dazu kann bei der in Fig. 8 gezeigten Ausführungsform durch eine entsprechende Ausgestaltung und Anordnung der Schaufeln 9 auch der Kernbereich 10 in Axialrichtung weitgehend blickdicht ausgestaltet sein. Hierzu erstrecken sich einige, jedoch nicht alle Schaufeln 9 auch bis in den Kernbereich 10. Diese radial längeren Schaufeln werden im folgenden mit 9' bezeichnet. Um nun den Strömungswiderstand im Kernbereich 10 kleiner ausgestalten zu können als im benachbarten Bereich der Ringfläche 12, kann beispielsweise vorgesehen sein, dass sich die Schaufel 9', die sich im Kernbereich 10 erstrecken, im Kernbereich in der Umfangsrichtung nicht überlappen oder weniger überlappen als im Bereich der Ringfläche 12. Sofern sich diese Schaufeln 9' im Kernbereich 10 in der Umfangsrichtung nicht überlappen, sind sie bezüglich der Umfangsrichtung bevorzugt nebeneinander angeordnet, um die gewünschte Blickdichtheit in Axialrichtung realisieren zu können.

Im gezeigten, bevorzugten Beispiel sind ohne Beschränkung der Allgemeinheit genau zwei Schaufeln 9' radial länger ausgebildet als die übrigen Schaufeln 9. Die freien Schaufelenden dieser Schaufeln 9' sind durch Fortsätze 22 gegenüber den freien Enden der anderen Schaufeln 9 in radialer Richtung verlängert. Diese Fortsätze 22, die an den jeweiligen Schaufeln 9' integral angeformt sind, können über einen hier nicht dargestellten Mittelpunkt der Fläche 12 beziehungsweise der Einrichtung 7 radial vorstehen. Das heißt, die radiale Länge der jeweiligen Schaufel 9' ist größer als der Radius des kreiszylindrischen Rohrkörpers 8. In jedem Fall ragen diese Schaufeln 9' mit den Fortsätzen 22 in den Kernbereich 10 hinein, während alle anderen Schaufeln 9 mit ihren freien Enden jeweils am Kernbereich 10 enden.

Die beiden mit den Fortsätzen 22 versehenen Schaufeln 9' sind am Rohrkörper 8 einander diametral gegenüberliegend angeordnet. Die Fortsätze 22 können so ausgestaltet sein, dass sie bezüglich des Mittelpunkts des Rohrkörpers 8 rotationssymmetrisch gestaltet. Dabei können sich die beiden Schaufeln 9' im Bereich ihrer Fortsätze 22 in Umfangsrichtung geringfügig überlappen, bevorzugt sind sie jedoch in Umfangsrichtung überlappungsfrei, also nebeneinander angeordnet. Die radial längeren Schaufeln 9' sind insbesondere gleichförmig bis in die Fortsätze 22 verwunden, so dass die Verwindung dieser Schaufel 9' im Kernbereich am kleinsten ist, wodurch der Strömungswiderstand durch die Schaufeln 9' im Zentrum am kleinsten ist.

Bei den in den Fig. 2 bis 4 gezeigten Ausführungsformen sind die Schaufeln 9 so ausgestaltet und angeordnet, dass sich die genannte blickdichte Ringfläche 12 radial bis zum Ringkörper 8 erstreckt. Demnach ist bei dieser Ausführungsform die blickdichte Ringfläche 12 radial innen durch die zentrale Durchgangsöffnung 10 und radial außen durch den Rohrkörper 8 begrenzt.

Um eine derartige blickdichte Ringfläche 12 auszugestalten, sind bei der Ausführungsform der Fig. 2 bis 4 die Schaufeln 9 radial außen an einen Übergang 13 zum Rohrkörper 8 jeweils so ausgestaltet, dass sie dort mit ihrem Querschnittsprofil in einer Ebene liegen, die sich im wesentlichen senkrecht zur Axialrichtung des Rohrkörpers 8 erstreckt. Hierdurch können sich die benachbarten Schaufeln 9 von der zentralen Durchgangsöffnung 10 bis zum Rohrkörper 8 gegenseitig überlappen. Diese gegenseitige Überlappung in axialer Richtung führt zu gewünschten Blickdichtigkeit der Ringfläche 12 in der Axialrichtung.

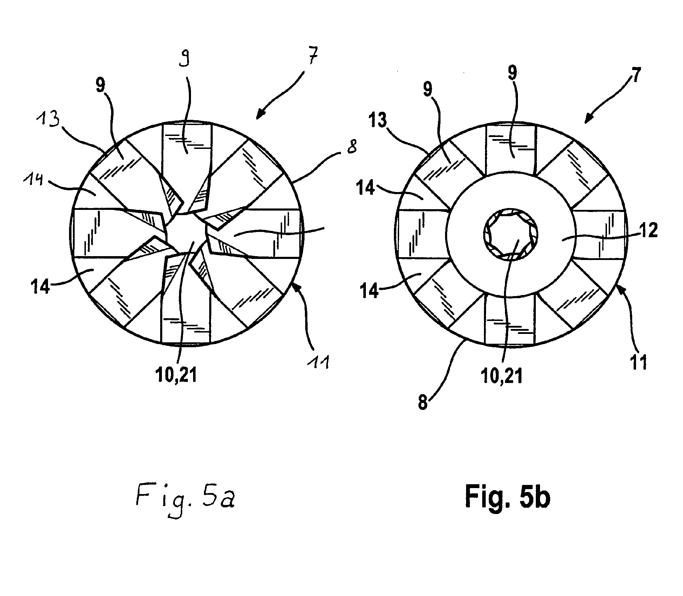

Die Fig. 5 bis 8 zeigen andere Ausführungsformen der Einrichtung 7. Bei diesen Ausführungsformen sind die Schaufeln 9 bzw. 9' so angeordnet und ausgestaltet, dass radial außerhalb der blickdichten Ringfläche 12 zwischen Schaufeln 9, 9', die in Umfangsrichtung zueinander benachbart sind, axial freie Lücken 14 entstehen. Diese Lücken 14 sind dabei in Umfangsrichtung verteilt um die blickdichte Ringfläche 12 angeordnet und erzeugen dort einen relativen Druckabfall, wodurch die Einrichtung 7 einen reduzierten Durchströmungswiderstand besitzt. Die in axialer Richtung blickdichte Ringfläche 12 ist hierbei radial innen im wesentlichen durch die zentrale Durchgangsöffnung 21 bzw. durch den Kernbereich 10 und radial außen durch einen weiteren Ringbereich begrenzt, der sich bis zum Rohrkörper 8 erstreckt und der die Lücken 14 enthält.

Diese Bauweise mit den axial freien Lücken 14 kann bevorzugt dadurch erreicht werden, dass die Schaufeln 9 radial außen am Übergang 13 zum Rohrkörper 8 mit ihrem jeweiligen Querschnittsprofil in einer Ebene liegen, die gegenüber einer senkrecht zur Axialrichtung verlaufenden Ebene geneigt sind. Diese Neigung kann beispielsweise zwischen 20° und 70° liegen. Im gezeigten Beispiel liegt diese Neigung vorzugsweise bei etwa 45°.

Die Schaufeln 9 können bei den Ausführungsformen der Fig. 2 bis 8 so ausgestaltet sein, dass sich ihre Anstellung gegenüber der Axialrichtung radial entlang der jeweiligen Schaufel 9, 9' verändert. Die Veränderung der Anstellung kann dabei stufenlos erfolgen, wodurch die Schaufeln 9, 9' eine Verwindung aufweisen. Ebenso kann die Veränderung der Anstellung in Stufen erfolgen. Hierzu können Teilbereiche innerhalb der jeweiligen Schaufeln 9, 9' geringfügig gegenüber dem Rest der jeweiligen Schaufel 9, 9' abgewinkelt sein. Bevorzugt ist dabei eine Ausführungsform, bei welcher die Anstellung der Schaufeln 9, 9' entlang der Schaufel 9, 9' radial von außen nach innen abnimmt. Im Idealfall sind die Schaufeln 9, 9' radial innen, also am Übergang zum zentralen Kernbereich 10 nicht angestellt, wodurch sich ihr Querschnittsprofil dort im wesentlichen parallel zur Axialrichtung erstreckt. Die maximale Anstellung liegt dann radial außen im Bereich des Rohrkörpers 8 vor. Diese maximale Anstellung liegt bei der in den Fig. 5 bis 8 gezeigten Ausführungsform etwa bei 45°. Bei der in den Fig. 2 bis 4 gezeigten Ausführungsform sind die Schaufeln 9 radial außen etwa um 90° gegenüber der Axialrichtung angestellt.

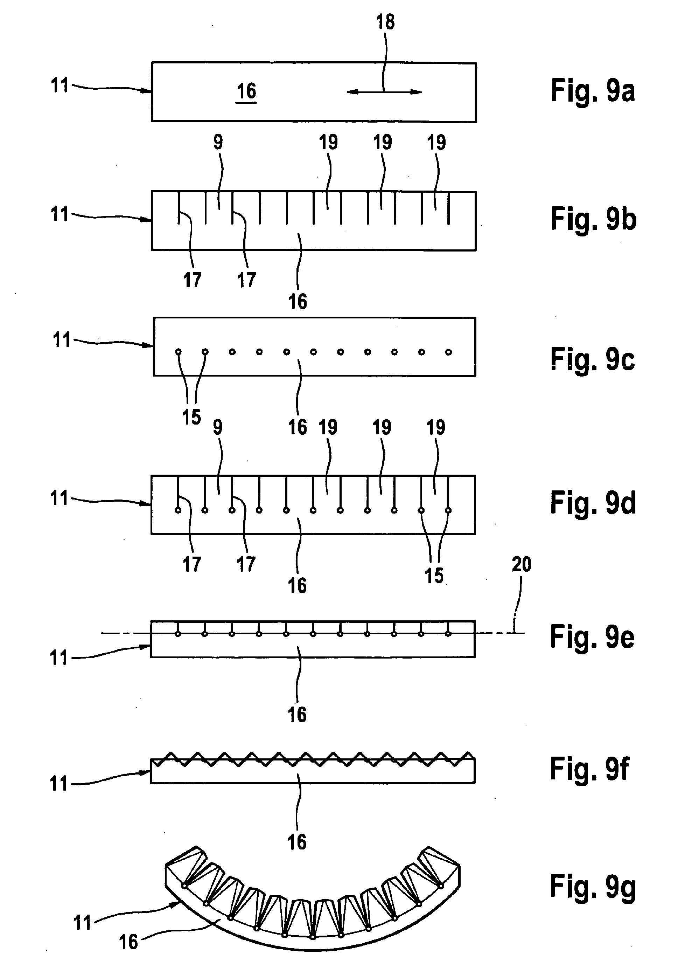

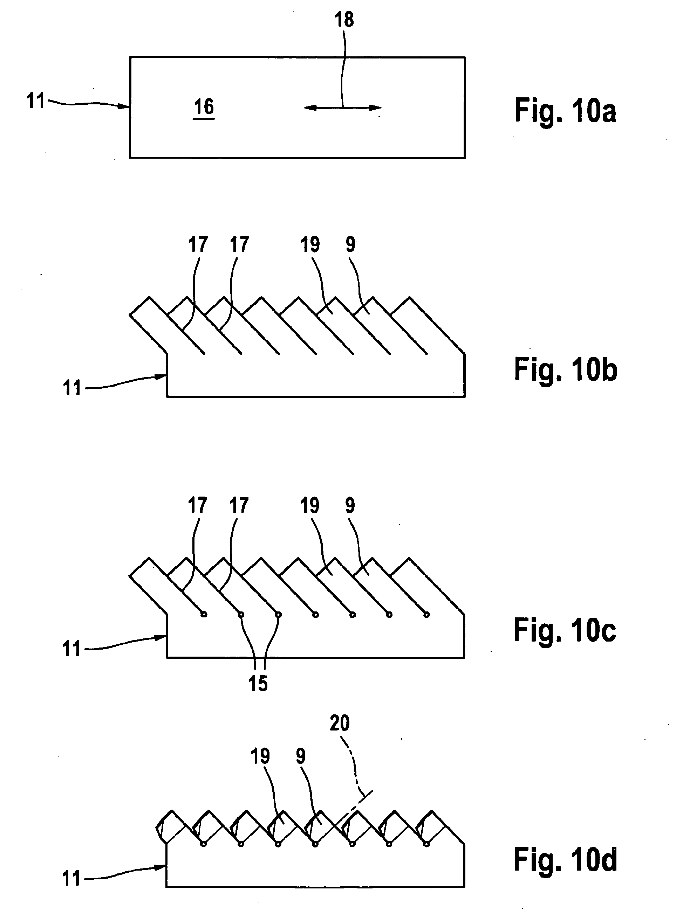

Um die Dauerfestigkeit der Misch- und/oder Verdampfungseinrichtung 7 zu erhöhen, können die einzelnen, in Umfangsrichtung zueinander benachbarten Schaufeln 9 radial außen am Übergang 13 zum Rohrkörper 8 jeweils über eine abgerundete Öffnung 15 aneinander grenzen. Diese abgerundeten Öffnungen 15 sind z.B. in den Fig. 9c, 9d und 10c sowie 10d besser zu erkennen. Die abgerundeten Öffnungen 15 dienen zur Reduzierung von Spannungen innerhalb des Blechkörpers 11, um die Gefahr einer Rissbildung zu reduzieren.

Besonders vorteilhaft sind Ausführungsformen, bei denen die Schaufeln 9, 9' so ausgestaltet und angeordnet sind, dass sie einander nicht berühren. Zweckmäßig ist dabei eine Weiterbildung, bei der sich die Schaufel 9, 9' auch dann nicht berühren, wenn die Einrichtung 7 auf Betriebstemperatur aufgeheizt ist, die in einer Abgasanlage 3 vergleichsweise hoch sein kann. Durch diese kontaktfreie Bauweise können Beschädigungen und störende Geräuschentwicklungen innerhalb der Einrichtung 7 vermieden werden.

Im Folgenden wird anhand der Fig. 9 und 10 ein bevorzugtes Verfahren zum Herstellen der Misch- und/oder Verdampfungseinrichtung 7 näher erläutert.

Entsprechend Fig. 9a ist der Blechkörper 11, aus dem letztlich der Rohrkörper 8 und die Schaufeln 9 durch Umformung ausgebildet werden, in einem Ausgangszustand ein im wesentlichen ebener Blechstreifen 16. In diesen Blechstreifen 16 werden nun gemäß Fig. 9b Schnitte 17 eingearbeitet. Dabei werden die Schnitte 17 seitlich angesetzt, ohne dass die Schnitte 17 den Blechstreifen 16 durchdringen. Die einzelnen Schnitte 17 erstrecken sich parallel zueinander und sind gegenüber der Längsrichtung des Blechstreifens 16 geneigt. Die Längsrichtung des Blechstreifens 16 ist dabei durch die Umfangsrichtung des damit gebildeten Rohrkörpers 8 definiert. Die Längsrichtung des Blechstreifens 16 ist in Fig. 9a durch einen Doppelpfeil symbolisiert und mit 18 bezeichnet.

Anschließend können optional gemäß Fig. 9d die abgerundeten Öffnungen 15 in den Blechstreifen 16 eingearbeitet werden, derart, dass die Öffnungen 15 jeweils am Ende eines der Schnitte 17 angeordnet sind. Hierdurch kann die Gefahr einer Rissbildung am jeweiligen Schnittende reduziert werden. Alternativ ist es ebenso möglich, gemäß Fig. 9c zuerst die abgerundeten Öffnungen 15 in den Blechstreifen 16 einzuarbeiten und erst danach gemäß Fig. 9d die Schnitte 17 so einzubringen, dass diese jeweils in einer der Öffnungen 15 enden. Ebenso ist es grundsätzlich möglich, die Schnitte 17 und die Öffnungen 15 gleichzeitig, z.B. mit einem Stanzvorgang, in den Blechstreifen 16 einzubringen.

Durch die Schnitte 17 werden am Blechstreifen 16 eine Vielzahl in der Längsrichtung 18 des Blechstreifens 16 nebeneinander angeordneter Querstreifen 19 ausgebildet, die durch die Schnitte 17 voneinander getrennt sind. Diese Querstreifen 19 bilden später dann die Schaufeln 9, die durch die Schnitte 17 hier bereits voneinander vereinzelt sind. Um die in den Fig. 2 bis 4 gezeigte Ausführungsform auszubilden, werden die Schnitte 17 hier so gesetzt, dass sie sich quer zur Längsrichtung 18 des Blechstreifens 16 erstrecken.

Gemäß Fig. 9e werden die vereinzelten Schaufeln 9 bzw. die Querstreifen 9 anschließend jeweils um eine senkrecht zu den Schnitten 17 verlaufende Biegeachse 20 umgebogen, so dass sie beispielsweise rechtwinklig vom übrigen Blechstreifen 16 abstehen. Es ist klar, dass hier auch andere Biegewinkel möglich sind, die größer oder auch kleiner als 90° sein können.

Gemäß Fig. 9f können die abgewinkelten bzw. umgebogenen vereinzelten Schaufeln 9 bzw. die Querstreifen 19 mit einer variierenden Anstellung ausgestattet werden, beispielsweise werden hierzu die Schaufeln 9 kontinuierlich verwunden. Ebenso können die Schaufeln 9 durch Abkanten von jeweils wenigstens einem Teilbereich stufig mit variierender Anstellung versehen werden.

Anschließend kann gemäß Fig. 9g der Blechstreifen 16 um eine parallel zur Axialrichtung des Rohrkörpers 8 verlaufende Biegeachse gebogen bzw. aufgewickelt oder aufgerollt werden, um mit dem restlichen Blechstreifen 16 den Rohrkörper 8 auszubilden. Beispielsweise kann der Blechstreifen 16 an einem Stoß oder in einem Überlappungsbereich verschweißt werden. Ebenso sind andere Fixiertechniken denkbar. Nach dem Aufwickeln gemäß Fig. 9g liegt dann der in den Fig. 2 bis 4 gezeigte Blechkörper 11 vor.

Um die in den Fig. 5 bis 7 gezeigte Ausführungsform herstellen zu können, wird der in Fig. 10a gezeigte Blechstreifen 16 gemäß Fig. 10e so geschnitten, dass sich die Schnitte 17 weniger als 90° gegenüber der Längsrichtung 18 des Blechstreifens 16 geneigt erstrecken. Beispielsweise erstrecken sich hier die Schnitte 17 um etwa 45° gegenüber der Längsrichtung 18 geneigt. Ebenso sind auch andere Neigungswinkel, beispielsweise zwischen 20° und 70° denkbar. Durch die schrägen Schnitte 17 entsteht ein Abfall. Auch hier ist es gemäß Fig. 10c möglich, die abgerundeten Öffnungen 15 so am Blechstreifen 16 anzubringen, dass die Schnitte 17 in diesen Öffnungen 15 enden. Es ist klar, dass analog zu der Vorgehensweise gemäß der Fig. 9a bis 9g die Schnitte 17 und die Öffnungen 15 entweder gleichzeitig oder in beliebiger Reihenfolge hintereinander in den Blechstreifen 16 eingebracht werden können.

Gemäß Fig. 10d erfolgt anschließend wieder das Umbiegen der vereinzelten Querstreifen 19 bzw. Schaufeln 9, wobei jede einzelne Schaufel 9 wieder um eine Biegeachse 20 umgebogen wird, die sich quer zur Schnittrichtung erstreckt.

Bei dieser Ausführungsform besitzen die Schaufeln 9 bereits nach dem Umbiegen eine Anstellung gegenüber der Axialrichtung des Rohrkörpers 8. Weiterhin kann der Verlauf der Anstellung entlang der jeweiligen Schaufel 9 noch verändert werden, beispielsweise durch eine Verwindung oder durch eine gestufte Veränderung der Anstellung, beispielsweise durch Abkanten wenigstens eines vorbestimmten Bereichs innerhalb der Schaufeln 9. Anschließend wird auch der so gebildete Blechstreifen 16 aufgewickelt, um den Rohrkörper 8 auszubilden.

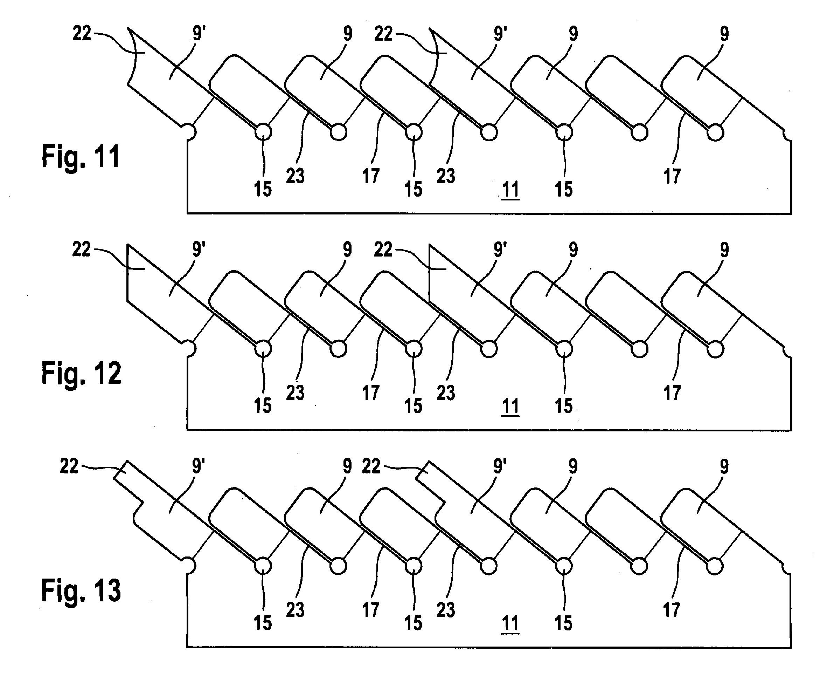

Zur Herstellung der in Fig. 8 gezeigten Ausführungsform wird der Blechstreifen 16 entsprechend den Fig. 11 bis 13 so bearbeitet, dass beim Freischneiden der Schaufeln 9 gleichzeitig auch die radial längeren Schaufeln 9', also die mit den Fortsätzen 22 versehenen Schaufeln 9' ausgebildet werden. Die Fig. 11 bis 13 entsprechen im wesentlichen der Fig. 10c, bei der die Einrichtung 7 jedoch nur gleich große bzw. gleich lange Schaufeln 9 aufweist. Für die geometrische Formgebung der Fortsätze 22 sind grundsätzlich beliebige Varianten möglich. Beispielsweise zeigt Fig. 11 eine Ausführungsform mit einem abgerundeten, sichelförmigen und spitz zulaufenden Fortsatz 22. Fig. 12 zeigt eine Variante mit keilförmigem, ebenfalls spitz zulaufendem Fortsatz 22. Im Unterschied dazu zeigt Fig. 13 eine Ausführungsform mit einer gestuften Schaufel 9', bei welcher der Fortsatz 22 einen definierten Abschnitt der jeweiligen Schaufel 9' in radialer Richtung verlängert. Die Schaufel 9' hat dadurch eine gestufte Kontur beziehungsweise ein gestuftes freies Ende.

Den Darstellungen der Fig. 11 bis 13 ist außerdem entnehmbar, dass die Schaufeln 9 bevorzugt so vom Blechstreifen 16 freigeschnitten werden, dass zwischen benachbarten Schaufeln 9 ein Spalt 23 entsteht. Durch diesen Spalt 23 können Berührungen zwischen benachbarten Schaufeln 9, 9' beim fertigen Blechkörper 11 vermieden werden.

Bevorzugt sind nun in der in Fig. 1 gezeigten Abgasanlage 3 die Einspritzeinrichtung 6 und die Misch- und/oder Verdampfungseinrichtung 7 so aufeinander abgestimmt, dass ein von der Einspritzeinrichtung 6 erzeugter einstrahliger oder mehrstrahliger Eduktstrahl die Schaufeln 9 der Einrichtung 7 radial außerhalb des zentralen Kernbereichs 10 trifft. Vorzugsweise trifft der Eduktstrahl ausschließlich innerhalb der blickdichten Ringfläche 12 auf die Schaufeln 9. Zweckmäßig erfolgt die Auslegung bzw. Anpassung so, dass der jeweilige Eduktstrahl ausschließlich außerhalb des Kernbereichs 10 und/oder ausschließlich innerhalb der blickdichten Ringfläche 12 auf die Schaufeln 9 trifft.

## Patentansprüche

1. Misch- und/oder Verdampfungseinrichtung für eine Abgasanlage (3) einer Brennkraftmaschine (1), insbesondere in einem Kraftfahrzeug,
- mit einem Rohrkörper (8), an dessen einen axialen Ende mehrere, in Umfangsrichtung zueinander benachbarte, radial nach innen vorstehende Schaufeln (9) angeordnet sind,
- wobei die Schaufeln (9) gegenüber der Axialrichtung angestellt sind,
- wobei der Rohrkörper (8) zusammen mit den Schaufeln (9) aus einem einzigen Blechkörper (11) durch Umformen hergestellt ist,
- wobei sich die Schaufeln (9) in Umfangsrichtung überlappen, derart, dass eine koaxial angeordnete, in Axialrichtung blickdichte Fläche (12) entsteht,
- wobei die Schaufeln (9) so ausgestaltet und angeordnet sind, dass die sich durch Überlappung der Schaufeln (9) ausbildende Fläche eine einen zentralen Kernbereich (10) umschließende Ringfläche (12) ist,
**dadurch gekennzeichnet,**
**dass** genau zwei oder mehrere, jedoch nicht alle Schaufeln (9') jeweils mit ihrem freien Schaufelende bis in den Kernbereich (10) hineinragen, während die übrigen Schaufeln (9) mit ihren freien Enden jeweils am Kernbereich (10) enden.

2. Einrichtung nach Anspruch 1,
**dadurch gekennzeichnet,**
**dass** die Schaufeln (9) so angeordnet und ausgestaltet sind, dass sich die blickdichte Fläche (12) radial bis zum Rohrkörper (8) erstreckt, wobei insbesondere vorgesehen sein kann, dass die Schaufeln (9) radial außen am Übergang (13) zum Rohrkörper (8) mit ihrem Profil jeweils in einer Ebene liegen, die sich senkrecht zur Axialrichtung erstreckt.

3. Einrichtung nach Anspruch 1,
**dadurch gekennzeichnet,**
**dass** die Schaufeln (9) so angeordnet und ausgestaltet sind, dass radial außerhalb der blickdichten Fläche (12) zwischen in Umfangsrichtung benachbarten Schaufeln (9) axial freie Lücken (14) entstehen, wobei insbesondere vorgesehen sein kann, dass die Schaufeln (9) radial außen am Übergang (13) zum Rohrkörper (8) mit ihrem Profil jeweils in einer Ebene liegen, die gegenüber einer senkrecht zur Axialrichtung verlaufenden Ebene geneigt ist.

4. Einrichtung nach einem der Ansprüche 1 bis 3,
**dadurch gekennzeichnet,**
**dass** die Schaufeln (9) so ausgestaltet und angeordnet sind, dass sich im Kernbereich (10) ein kleinerer Durchströmungswiderstand einstellt als im Bereich der Ringfläche (12).

5. Einrichtung nach einem der Ansprüche 1 bis 4,
**dadurch gekennzeichnet,**
- **dass** die Schaufeln (9) so ausgestaltet und angeordnet sind, dass auch der Kernbereich (10) in Axialrichtung weitgehend blickdicht ist, wobei zumindest oder genau zwei Schaufeln (9') jeweils ein freies Schaufelende aufweisen, das über einen Mittelpunkt der Fläche (12) radial vorsteht, und/oder
- **dass** die zwei radial längeren Schaufeln (9') einander diametral gegenüberliegen, und/oder
- **dass** sich die wenigstens zwei radial längeren Schaufeln (9') im Kernbereich (10) in Umfangsrichtung teilweise überlappen, und/oder
- **dass** die Schaufeln (9) so angeordnet und ausgestaltet sind, dass sich die Schaufeln (9) in der Ringfläche (12) stärker überlappen als im Kernbereich (10), und/oder
- **dass** die Schaufeln (9) so angeordnet und ausgestaltet sind, dass sich die im Kernbereich (10) erstreckenden Schaufeln (9') in Umfangsrichtung nicht überlappen, sondern nebeneinander angeordnet sind.

6. Einrichtung nach einem der Ansprüche 1 bis 5,
**dadurch gekennzeichnet,**
- **dass** die Schaufeln (9) so ausgestaltet und angeordnet sind, dass sie einander nicht berühren, und/oder
- **dass** die Schaufeln (9) so ausgestaltet und angeordnet sind, dass sie einander auch dann nicht berühren, wenn die Einrichtung (7) auf Betriebstemperatur aufgeheizt ist.

7. Einrichtung nach einem der Ansprüche 1 bis 6,
**dadurch gekennzeichnet,**
**dass** die in Umfangsrichtung benachbarten Schaufeln (9) radial außen am Übergang (13) zum Rohrkörper (8) jeweils über eine abgerundete Öffnung (15) aneinander grenzen.

8. Einrichtung nach einem der Ansprüche 1 bis 7,
**dadurch gekennzeichnet,**
**dass** die Schaufeln (9) eine sich in radialer Richtung entlang der Schaufel (9) stufenlos oder gestuft verändernde Anstellung gegenüber der Axialrichtung aufweisen, wobei insbesondere vorgesehen sein kann, dass die Anstellung entlang der jeweiligen Schaufel (9) radial von außen nach innen abnimmt.

9. Einrichtung nach einem der Ansprüche 1 bis 8,
**dadurch gekennzeichnet,**
**dass** der Blechkörper (11) ein Blechstreifen (16) ist, von dem die Schaufeln (9) durch parallele, gegenüber der Längsrichtung (18) des Blechstreifens (16) geneigte Schnitte (17) zueinander vereinzelt sind und gegenüber dem die vereinzelten Schaufeln (9) jeweils um eine geneigt oder senkrecht zu den Schnitten (17) verlaufende Biegeachse (20) umgebogen sind.

10. Verfahren zum Herstellen einer Misch- und/oder Verdampfungseinrichtung (7) nach einem der Ansprüche 1 bis 9,
- bei dem ein ebener Blechstreifen (16) mit seitlichen Schnitten (17) versehen wird, die sich parallel zueinander erstrecken und die gegenüber einer Längsrichtung (18) des Blechstreifens (16) geneigt sind,
- bei dem die durch die Schnitte (17) gebildeten Querstreifen (19) jeweils um eine geneigt oder quer zum jeweiligen Schnitt (17) verlaufende Biegeachse (20) gegenüber dem übrigen Blechstreifen (16) umgebogen werden,
- bei dem der Blechstreifen (16) aufgerollt wird, derart, dass die umgebogenen Querstreifen (19) radial nach innen zeigende Schaufeln (9, 9') bilden und dass der übrige Blechstreifen (16) einen in Umfangsrichtung geschlossenen Ringkörper (8) bildet,
**dadurch gekennzeichnet,**
- **dass** genau zwei oder mehrere Schaufeln (9'), jedoch nicht alle Schaufeln (9,9') länger sind als die übrigen Schaufeln (9),
- **dass** beim Freischneiden der Schaufeln (9) gleichzeitig auch die radial längeren Schaufeln (9') ausgebildet werden.

11. Verfahren nach Anspruch 10,
**dadurch gekennzeichnet,**
**dass** die Schnitte (17) jeweils in einer Öffnung (15) mit rundem Öffnungsquerschnitt enden, wobei diese Öffnungen (15) vor oder nach oder gleichzeitig mit dem Schneiden in den Blechstreifen (16) eingebracht werden.

12. Abgasanlage für eine Brennkraftmaschine (1), insbesondere in einem Kraftfahrzeug,
- mit einem Abgas von der Brennkraftmaschine (1) abführenden Abgasstrang (4),
- mit einer am Abgasstrang (4) angeordneten Einspritzeinrichtung (6) zum Einspritzen eines flüssigen Edukts in den Abgasstrang (4),
- mit einer im Abgasstrang (4) stromab der Einspritzeinrichtung (6) angeordneten Misch- und/oder Verdampfungseinrichtung (7) nach einem der Ansprüche 1 bis 9.

13. Abgasanlage nach Anspruch 12,
**dadurch gekennzeichnet,**
- **dass** die Einspritzeinrichtung (6) und die Misch- und/oder Verdampfungseinrichtung (7) so aufeinander abgestimmt sind, dass die Einspritzeinrichtung (6) einen Eduktstrahl erzeugt, der die Schaufeln (9) innerhalb der blickdichten Fläche (12) trifft, und/oder
- **dass** die Einspritzeinrichtung (6) und die Misch- und/oder Verdampfungseinrichtung (7) so aufeinander abgestimmt sind, dass die Einspritzeinrichtung (6) einen Eduktstrahl erzeugt, der die Schaufeln (9) radial außerhalb des zentralen Kernbereichs (10) trifft.

## Claims

1. A mixing and/or evaporation device for an exhaust system (3) of a combustion engine (1), more preferably in a motor vehicle,
- with a tubular body (8) on whose one axial end a plurality of blades (9) adjacent to one another in circumferential direction and radially protruding to the inside are arranged,
- wherein the blades (9) are set with respect to the axial direction,
- wherein the tubular body (8) together with the blades (9) is produced of a single sheet metal body (11) through forming,
- wherein the blades (9) overlap one another in circumferential direction in such a manner that a coaxially arranged surface (12) opaque in axial direction is obtained,
- wherein the blades (9) are so configured and arranged that the surface forming through overlapping of the blades (9) is an annular surface (12) enclosing a central core region (10),
**characterized in that**
exactly two or several, however not all blades (9') in each case with their free blade end protrude as far as into the core region (10), while the remaining blades (9) with their free ends in each case end at the core region (10).

2. The device according to Claim 1,
**characterized in that**
the blades (9) are so arranged and configured that the opaque surface (12) extends radially as far as to the tubular body (8), wherein it can be more preferably provided that the blades (9) radially outside at the transition (13) to the tubular body (8) with their profile are each located in a plane which extends perpendicularly to the axial direction.

3. The device according to Claim 1,
**characterized in that**
the blades (9) are so arranged and configured that radially outside the opaque surface (12) between in circumferential direction adjacent blades (9) axially free gaps (14) are created, wherein it can be more preferably provided that the blades (9) radially outside at the transition (13) to the tubular body (8) with their profile are each located in a plane which, relative to a plane running perpendicularly to the axial direction, is inclined.

4. The device according to any one of the Claims 1 to 3,
**characterized in that**
the blades (9) are so configured and arranged that in the core region (10) a smaller through-flow resistance materialises than in the region of the annular surface (12).

5. The device according to any one of the Claims 1 to 4,
**characterized in that**
- the blades (9) are so configured and arranged that the core region (10) is also largely opaque in axial direction, while at least or exactly two blades (9') each have a free blade end which radially protrudes over a centre point of the surface (12), and/or
- the two radially longer blades (9') are located diametrically opposite each other, and/or
- the at least two radially longer blades (9') in the core region (10) partially overlap each other in circumferential direction, and/or
- the blades (9) are so arranged and configured that the blades (9) in the annular surface (12) overlap one another to a greater extent than in the core region (10), and/or
- the blades (9) are so arranged and configured that the blades (9') extending in the core region (10) do not overlap one another in circumferential direction but are arranged next to one another.

6. The device according to any one of the Claims 1 to 5,
**characterized in that**
- the blades (9) are so configured and arranged that they do not touch one another, and/or
- the blades (9) are so configured and arranged that they do not touch one another even when the device (7) is heated up to operating temperature.

7. The device according to any one of the Claims 1 to 6,
**characterized in that**
the in circumferential direction adjacent blades (9) radially outside at the transition (13) to the tubular body (8) in each case adjoin one another via a rounded-off opening (15).

8. The device according to any one of the Claims 1 to 7,
**characterized in that**
the blades (9) have a setting relative to the axial direction which in radial direction along the blade (9) changes in a stepless or stepped manner, wherein it can be more preferably provided that the setting along the respective blade (9) decreases radially from the outside to the inside.

9. The device according to any one of the Claims 1 to 8,
**characterized in that**
the sheet metal body (11) is a sheet metal strip (16) from which the blades (9) are singled out relative to one another through parallel cuts (17) inclined with respect to the longitudinal direction (18) of the sheet metal strip (16) and relative to the singled-out blades (9) in each case are bent over about a bending axis (20) which runs inclined or perpendicularly to the cuts (17).

10. A method for producing a mixing and/or evaporation device (7) according to any one of the Claims 1 to 9,
- wherein a flat sheet metal strip (16) is provided with lateral cuts (17), which extend parallel to one another and which relative to a longitudinal direction (18) of the sheet metal strip (16) are inclined,
- wherein the transverse strips (19) formed through the cuts (17) in each case are bent over relative to the remaining sheet metal strip (16) about a bending axis (20) which runs inclined or transversely to the respective cut (17),
- wherein the sheet metal strip (16) is rolled up in such a manner that the bent-over transverse strips (19) form blades (9, 9') pointing radially to the inside and in that the remaining sheet metal strip (16) forms an annular body (8) closed in circumferential direction,
**characterized in that**
- exactly two or several blades (9'), however not all blades (9, 9') are longer than the remaining blades (9),
- upon free-cutting of the blades (9) the radially longer blades (9') are formed at the same time.

11. The method according to Claim 10,
**characterized in that**
the cuts (17) in each case end in an opening (15) with round opening cross section, wherein these openings (15) are created in the sheet metal strips (16) before or after or at the same time as the cutting.

12. An exhaust system for a combustion engine (1), more preferably in a motor vehicle,
- with an exhaust line (4) discharging exhaust gas from the combustion engine (1),
- with an injection device (6) arranged on the exhaust line (4) for injecting a liquid educt in the exhaust line (4),
- with a mixing and/or evaporation device (7) according to any one of the Claims 1 to 9 arranged in the exhaust line (4) downstream of the injection device (6).

13. The exhaust system according to Claim 12,
**characterized in that**
- the injection device (6) and the mixing and/or evaporation device (7) are so matched to one another that the injection device (6) generates an educt jet which strikes the blades (9) within the opaque surface (12), and/or
- the injection device (6) and the mixing and/or evaporation device (7) are so matched to one another that the injection device (6) generates an educt jet which strikes the blades (9) radially outside the central core region (10).

## Revendications

1. Dispositif de mélange et/ou d'évaporation pour une installation d'échappement (3) d'un moteur à combustion interne (1), en particulier sur un véhicule automobile,
- comprenant un corps tubulaire (8), sur une extrémité axiale duquel sont disposées plusieurs ailettes (9), voisines les unes des autres dans le sens périphérique et dépassant radialement vers l'intérieur,
- les ailettes (9) étant disposées en face de la direction axiale,
- le corps tubulaire (8) étant fabriqué conjointement avec les ailettes (9) par déformation à partir d'un unique corps en tôle (11),
- les ailettes (9) se chevauchant dans le sens périphérique de telle sorte qu'il se forme une surface (12) disposée sur le même axe, invisible dans le sens axial,
- les ailettes (9) étant conçues et disposées de telle sorte que la surface se formant par le chevauchement des ailettes (9) est une surface annulaire (12) entourant une zone intérieure (10) centrale,
**caractérisé en ce que**
exactement deux ou plusieurs, mais pas toutes les ailettes (9'), dépassent à chaque fois par leur extrémité d'ailette libre jusque dans la zone intérieure (10), alors que les autres ailettes (9) se terminent par leurs extrémités libres à chaque fois sur la zone intérieure (10).

2. Dispositif selon la revendication 1,
**caractérisé en ce que**
les ailettes (9) sont disposées et conçues de telle sorte que la surface (12) invisible s'étend radialement jusqu'au corps tubulaire (8), sachant qu'il peut être prévu en particulier que les ailettes (9) sont disposées radialement à l'extérieur sur la transition (13) avec le corps tubulaire (8) avec leur profil respectivement dans un plan qui s'étend perpendiculairement à la direction axiale.

3. Dispositif selon la revendication 1,
**caractérisé en ce que**
les ailettes (9) sont disposées et conçues de telle sorte que des interstices (14) libres axialement se forment radialement à l'extérieur de la surface (12) invisible entre des ailettes (9) voisines dans le sens périphérique, sachant qu'on peut prévoir en particulier que les ailettes (9) sont situées radialement à l'extérieur sur la transition (13) avec le corps tubulaire (8) avec leur profil à chaque fois dans un plan qui est incliné par rapport à un plan agencé perpendiculairement à la direction axiale.

4. Dispositif selon l'une quelconque des revendications 1 à 3,
**caractérisé en ce que**
les ailettes (9) sont conçues et disposées de telle sorte qu'il s'établit dans la zone intérieure (10) une résistance d'écoulement plus faible que dans la zone de la surface annulaire (12).

5. Dispositif selon l'une quelconque des revendications 1 à 4,
**caractérisé en ce que**
- les ailettes (9) sont conçues et disposées de telle sorte qu'également la zone intérieure (10) est largement invisible dans le sens axial, au moins ou exactement deux ailettes (9') présentant chacune une extrémité d'ailette libre, qui dépasse radialement par un centre de la surface (12) et/ou
- **en ce que** les deux ailettes (9') radialement plus longues se font face de façon diamétralement opposée, et/ou
- **en ce que** les au moins deux ailettes (9') radialement plus longues se chevauchent partiellement dans la zone intérieure (10) dans le sens périphérique, et/ou
- **en ce que** les ailettes (9) sont disposées et conçues de telle sorte que les ailettes (9) se chevauchent dans la surface annulaire (12) de façon plus importante que dans la zone intérieure (10) et/ou
- **en ce que** les ailettes (9) sont disposées et conçues de telle sorte que les ailettes (9') s'étendant dans la zone intérieure (10) ne se chevauchent pas dans le sens périphérique, mais sont disposées les unes à côté des autres.

6. Dispositif selon l'une quelconque des revendications 1 à 5,
**caractérisé en ce que**
- les ailettes (9) sont conçues et disposées de telle sorte qu'elles ne se touchent pas et/ou
- **en ce que** les ailettes (9) sont conçues et disposées de telle sorte qu'elles ne se touchent pas même lorsque le dispositif (7) est chauffé à la température de service.

7. Dispositif selon l'une quelconque des revendications 1 à 6,
**caractérisé en ce que**
les ailettes (9) voisines dans le sens périphérique sont contiguës radialement à l'extérieur sur la transition (13) avec le corps tubulaire (8) à chaque fois au moyen d'une ouverture (15) arrondie.

8. Dispositif selon l'une quelconque des revendications 1 à 7,
**caractérisé en ce que**
les ailettes (9) présentent une incidence par rapport au sens axial qui varie progressivement ou de façon étagée dans le sens radial le long de l'ailette (9), sachant qu'on peut prévoir en particulier que l'incidence diminue le long de l'ailette (9) respective radialement de l'extérieur vers l'intérieur.

9. Dispositif selon l'une quelconque des revendications 1 à 8,
**caractérisé en ce que**
le corps en tôle (11) est une bande de tôle (16), par laquelle les ailettes (9) sont séparées les unes des autres par des coupes (17) parallèles, inclinées par rapport à la direction longitudinale (18) de la bande de tôle (16), et par rapport à laquelle les ailettes (9) individuelles sont repliées à chaque fois autour d'un axe de flexion (20) agencé de façon inclinée ou perpendiculaire aux coupes (17).

10. Procédé pour fabriquer un dispositif de mélange et/ou d'évaporation (7) selon l'une quelconque des revendications 1 à 9,
- dans lequel une bande de tôle (16) plane est dotée de coupes (17) latérales qui s'étendent parallèlement entre elles et sont inclinées par rapport à une direction longitudinale (18) de la bande de tôle (16),
- dans lequel les bandes transversales (19) formées par les coupes (17) sont repliées à chaque fois autour d'un axe de flexion (20) agencé de façon inclinée ou transversalement à la coupe (17) respective par rapport à la bande de tôle (16) restante,
- dans lequel la bande de tôle (16) est enroulée, de telle sorte que les bandes transversales (19) repliées forment des ailettes (9, 9') dirigées radialement vers l'intérieur et que la bande de tôle (16) restante forme un corps annulaire (8) fermé dans le sens périphérique,
**caractérisé en ce que**
- exactement deux ou plusieurs ailettes (9'), mais pas toutes les ailettes (9, 9'), sont plus longues que les autres ailettes (9),
- **en ce que**, lors du dégagement par coupe des ailettes (9), également les ailettes (9') radialement plus longues sont formées simultanément.

11. Procédé selon la revendication 10,
**caractérisé en ce que**
les coupes (17) se terminent à chaque fois par une ouverture (15) avec une section d'ouverture ronde, ces ouvertures (15) étant introduites dans la bande de tôle (16) avant ou après ou en même temps que la découpe.

12. Installation d'échappement pour un moteur à combustion interne (1), en particulier sur un véhicule automobile,
- comprenant une branche d'échappement (4) évacuant des gaz brûlés du moteur à combustion interne (1),
- un dispositif d'injection (6) disposé sur la branche d'échappement (4) pour l'injection d'un éduit liquide dans la branche d'échappement (4),
- un dispositif de mélange et/ou d'évaporation (7), disposé dans la branche d'échappement (4) en aval du dispositif d'injection (6) selon l'une quelconque des revendications 1 à 9.

13. Installation d'échappement selon la revendication 12,
**caractérisée en ce que**
- le dispositif d'injection (6) et le dispositif de mélange et/ou d'évaporation (7) sont adaptés l'un à l'autre de telle sorte que le dispositif d'injection (6) génère un jet d'éduit qui rencontre les ailettes (9) à l'intérieur de la surface (12) invisible, et/ou
- **en ce que** le dispositif d'injection (6) et le dispositif de mélange et/ou d'évaporation (7) sont adaptés l'un à l'autre de telle sorte que le dispositif d'injection (6) génère un jet d'éduit qui rencontre les ailettes (9) radialement à l'extérieur de la zone intérieure (10) centrale.
